# EUROPÄISCHE PATENTANMELDUNG

(11) **EP 4 782 105 A1**
(43) Veröffentlichungstag der Anmeldung: **29.07.2026**
(21) Anmeldenummer: 26151456.6
(22) Anmeldetag: 13.01.2026
(51) Int. Cl.: B02C 18/30, A22C 17/00

(54) **VORRICHTUNG ZUR ZERKLEINERUNG VON FLEISCH UND ANDEREN ORGANISCHEN MATERIALIEN SOWIE LESE- UND/ODER SCHREIB-LESEEINRICHTUNG HIERFÜR**

(30) Priorität: 27.01.2025 DE 202025100406 U
(71) Anmelder: Lumbeck & Wolter GmbH & Co. KG, 42287 Wuppertal (DE)
(72) Erfinder: DÖRING, Fabian, 42287 Wuppertal (DE); BACK, Udo, 97702 Münnerstadt - Reichenbach (DE)
(74) Vertreter: Kohlstedde, Eva

(57) **Zusammenfassung**

Die Erfindung umfasst eine Vorrichtung, mit einem Gehäuse (10) und mit einem im Gehäuse (10) anordbaren Schneidsatz, der wenigstens ein Schneidsatzelement umfasst und/oder mit einem Lochzylinder wobei das Gehäuse (10) eine Öffnung (11) umfasst, durch die das bzw. die Schneidsatzelemente des Schneidsatzes und/oder der Lochzylinder in das Gehäuse (10) einbringbar und aus diesem entfernbar sind, wobei am und/oder im Schneidsatzelementbzw. im oder am Lochzylinder wenigstens ein Mittel zur berührungslosen und automatischen Identifikation angeordnet ist, und wobei am Gehäuse (10) eine Leseeinrichtung vorgesehen ist, die wenigstens eine Antenne und eine Elektronik umfasst und die die auf dem Mittel zur berührungslosen und automatischen Identifikation gespeicherten Informationen auslesen kann. Die Erfindung schlägt nun vor, dass die Leseeinrichtung wenigstens eine Ringantenne (31) umfasst, die umlaufend vor der Öffnung (11) des Gehäuses (10) angeordnet ist.

## Beschreibung

Die Erfindung betrifft eine Vorrichtung zur Zerkleinerung von Fleisch und anderen organischen Materialien wie einen Fleischwolf, eine Transportvorrichtung o.ä. der im Oberbegriff von Anspruch 1 genannten Art. Derartige Vorrichtungen finden vielfach Verwendung, einerseits zur Zerkleinerung von Fleisch und anderen organischen Materialien, andererseits aber auch für die Zerkleinerung anderer Güter. Üblicherweise sind derartige Vorrichtungen mit einem Schneidsatz bestückt, der ein oder mehrere Elemente aufweist. Die Anzahl und Anordnung der Elemente hat einen maßgeblichen Einfluss auf das gewolfte Material, insbesondere was die Feinheit und Qualität betrifft. Hier ist es wichtig, dass der Einbau der richtigen Schneidsatzteile in der korrekten Reihenfolge erfolgt.

Die meisten Schneidsätze verfügen über mehrere feststehende und rotierende Teile. Als feststehende Teile sind beispielsweise Vorschneider, Lochscheiben, Distanzringe, Stützkreuze zu nennen, rotierend sind meist Messer oder auch rotierende Lochplatten angeordnet. Zumeist wird das Schneidergebnis durch ein Zusammenwirken von Messer und Lochscheibe erzielt.

Um festzustellen, welche Schneidsatzteile in einer Vorrichtung montiert sind, können die Teile mit Transpondern, Chips oder ähnlichen Mitteln zur berührungslosen und automatischen Identifikation versehen sein. An bzw. in der Vorrichtung müssen diese Mittel dann ausgelesen werden, um den korrekten bzw. den fehlerhaften Einbau des Schneidsatzes festzustellen.

Es existieren Fleischwölfe, die eine Lesestation für RFID-Transponder an der Außenseite des Gehäuses aufweisen, bei denen eine Bedienperson die an den Schneidsatzteilen angeordneten Transponder auslesen lassen kann, bevor diese im Schneidsatz montiert werden. Nachteilig ist hier jedoch, dass es vorkommen kann, dass eine Bedienperson vergisst, den Transponder auslesen zu lassen oder dass ein Schneidsatzelement, welches von der Lesestation erfasst wurde, doch nicht im Fleischwolf montiert wird. Dieses System ist daher nicht besonderes sicher.

Die EP 1 201 312 B1 beschreibt ein Sicherheitssystem für Zerkleinerungsmaschinen wie Fleischwölfe. Der dort beschriebene Schneidsatz weist am Ausgabestutzen der Maschine als letztes eine Lochscheibe auf, die mit dem davor angeordneten rotierenden Messer zusammenwirkt. Diese Lochscheibe dient gleichzeitig dem Schutz der Bedienpersonen, denn durch die Lochscheibe kann nicht in das rotieren Messer gegriffen werden, was einen großes Verletzungsrisiko darstellen würde. Um zu verhindern, dass die Maschine ohne diese Lochscheibe in Betrieb genommen wird, ist die Lochscheibe mit einem Mittel, auf dem Daten abgespeichert und abgerufen werden können versehen. Diese Daten werden über eine Sende- und Empfangsanlage abgefragt und mit der Maschinensteuerung abgeglichen. Ist die fragliche Lochscheibe nicht montiert, kann die Maschine nicht in Betrieb genommen werden. Nachteilig an dieser Vorrichtung ist, dass nicht alle Schneidsatzelemente abgefragt werden und der vor der Lochscheibe befindliche Schneidsatz fehlerhaft montiert sein könnte und die Maschine trotzdem starten könnte.

Die DE 20 2007 003 778 U1 beschreibt einen Vorlege- und Distanzring zum Einsatz in Fleischwölfen. Dieser ist mit einem oder mehreren RFID-Chips ausgestattet. Auch hier ist eine Verknüpfung mit der Maschinensteuerung vorgesehen, so dass die Maschine nur dann in Betrieb genommen werden kann, wenn der Ring montiert ist. Auch hier ist keine Erkennung der einzelnen Schneidsatzelemente vorgesehen.

Schließlich beschreibt die EP 3 344 395 B1 einen Fleischwolf mit einem Schneidsatz, wobei die verschiedenen Schneidsatzelemente mit Transpondern, insbesondere mit passiven RFID-Chips ausgestattet sind. Im Inneren des Fleischwolfgehäuses ist in die Innenwandung eine Kommunikationsvorrichtung eingebracht, die die auf den Transpondern gespeicherten Daten auslesen und ggf. auch die Transponder mit neuen Daten beschreiben kann. In einem bevorzugten Ausführungsbeispiel ist die Kommunikationsvorrichtung in einem für die Verdrehsicherung der feststehenden Teile dienenden Nutenstein angeordnet. Bei den feststehenden Bauteilen des Schneidsatzes ist es relativ einfach, die Transponder in der Nähe der Kommunikationsvorrichtung vorzusehen, da diese eine feste Einbauposition besitzen. Anders sieht es jedoch bei den rotierenden Messern aus. Diese haben keine feste Einbauposition, so dass es vorkommen kann, dass das Messer um 180 Grad verschwenkt ist und der Transponder dadurch relativ weit von der Kommunikationsvorrichtung entfernt ist. Dem kann nur Abhilfe geschaffen werden, indem an den rotierenden Teilen mehrere Transponder vorgesehen sind, was jedoch teurer wird und zu unterschiedlichen Datensätzen auf diesen Transpondern führt, wenn die Transponder auch von der Kommunikationsvorrichtung beschrieben werden sollen, oder dass es mehrere Kommunikationsvorrichtungen gibt. Wie in dem Dokument selbst ausgeführt, ist hier die Kommunikation zwischen Transponder und Kommunikationsvorrichtung nur sicher realisierbar, wenn Transponder und Kommunikationsvorrichtung einander unmittelbar gegenüberliegen. Dies ist bei einem rotierenden Schneidsatzelement nicht zu gewährleisten.

Aufgabe der Erfindung ist es daher, die vorerwähnten Nachteile zu vermeiden und eine Vorrichtung zu schaffen, bei dem eine sichere Erkennung der eingebauten Schneidsatzelemente gegeben ist. Weiterhin ist es eine Aufgabe der Erfindung eine Lese- und oder Schreib-Leseeinrichtung für eine derartige Vorrichtung bereitzustellen. Diese Aufgaben werden durch die kennzeichnenden Merkmale von Anspruch 1 und Anspruch 16 gelöst, denen folgende besondere Bedeutung zukommt.

Bei der erfindungsgemäßen Vorrichtung ist eine Leseeinrichtung vorgesehen, die mindestens eine Ringantenne umfasst, die an der Öffnung des Gehäuses vorgesehen ist. Durch diese Öffnung werden alle Schneidsatzelemente montiert und demontiert, so dass durch die Ringantenne jedes Mittel zur berührungslosen und automatischen Identifikation, welches an oder in einem Schneidsatzelement angeordnet ist, erkannt wird. So ist immer erfassbar, welche Schneidsatzelemente die Antenne passiert haben auch wenn es sich um rotierende Schneidsatzelemente wie z.B. Messer handelt. Um festzustellen, ob das jeweilige Schneidsatzelement in die Maschine eingebaut, aus dieser entfernt oder nur kurz in den Bereich der Antenne gebracht wurde, sind wenigstens zwei Ringantennen vorgesehen, die parallel zueinander angeordnet sind. Da diese von dem am Schneidsatzelement angeordneten Mittel nacheinander passiert werden und das Mittel so nacheinander von den beiden Antennen erfasst wird, ist sofort feststellbar ob das Schneidsatzelement in die Vorrichtung ein- oder aus diesem ausgebaut wurde.

Eine andere Vorrichtung zur Zerkleinerung von Material, insbesondere zum Reiben von Käse und ähnlichen Waren oder auch zur Herstellung von Hackfleisch, Brät usw. ist ein Lochzylinder. Dieser wird an die Vorrichtung, beispielsweise einen üblichen Fleischwolf, angeschlossen. Der Schneidsatz kann dann entfallen. Mittels einer Förderschnecke wird das zu zerkleinernde Material in den Lochzylinder verbracht, so es dann durch die Löcher nach außen austreten kann und dabei zerkleinert wird. Auch der Lochzylinder und/oder die im Lochzylinder befindliche Förderschnecke können mit Mitteln zur berührungslosen und automatischen Identifikation ausgestattet sein, so dass das Lesegerät erkennt ob, und wenn ja, welcher Lochzylinder montiert ist. Nur bei Montage des korrekten Lochzylinders kann die Vorrichtung dann gestartet werden. Um das vorliegende Dokument besser lesbar zu machen, wird im Weiteren immer von Schneidsatzelement gesprochen. Hiermit kann jedoch im Sinne der Erfindung auch ein Lochzylinder gemeint sein.

Besonders bevorzugt wird an der Vorrichtung überprüft, welche Schneidsatzelemente bzw. sonstigen Bauteile eingebaut wurden und die Vorrichtung lässt sich nur starten, wenn alle Teile korrekt erkannt und ordnungsgemäß eingebaut wurden.

Auf den Mitteln zur berührungslosen und automatischen Identifikation können Daten über das jeweilige Schneidsatzelement an sich, wie Lochscheibe, einschließlich Lochgröße, Lochmuster usw., Messer, einschließlich Art des Messers, Anzahl der Schneiden usw. angegeben sein, aber auch differenziertere Daten, wie Hersteller, Standzeiten, Nachschleifvorgänge etc. Weiterhin kann auch angegeben sein, wann das Schneidsatzelement nachzuschleifen oder zu ersetzen ist, damit direkt dafür gesorgt werden kann, dass Ersatz vorhanden ist und die Vorrichtung nicht unnötig still steht.

Bei vielen Vorrichtungen dieser Art, insbesondere bei Fleischwölfen muss ein Auslaufschutz gegeben sein, um Verletzungen der Bedienpersonen zu verhindern. Hierbei wird verhindert, dass eine Bedienperson während des Betriebs des Fleischwolfes mit der Hand durch die Öffnung in den Schneidsatz greifen und sich so verletzen kann. Alternativ zum Auslaufschutz ist es auch ausreichend, eine Lochscheibe mit einem Lochdurchmesser ≤ 7,8 mm als letztes Schneidsatzelement vor der Öffnung einzufügen. Die Löcher sind dann so klein, dass eine Bedienperson nicht durch sie hindurchgreifen kann. Diese so genannten Endlochscheiben sind normalerwiese mit einer Kodierung versehen, so dass sichergestellt wird, dass diese korrekt montiert ist und auf den Auslaufschutz verzichtet werden kann. Ist die Lochscheibe mit einem Mittel zur berührungslosen und automatischen Identifikation versehen, kann automatisch festgestellt werden, ob diese an der richtigen Stelle montiert ist. Ist dies der Fall, wird der Fleischwolf freigegeben, falls dies nicht der Fall ist, lässt sich die Maschine nicht starten. Eine Kodierung der Endlochschiebe ist dann nicht notwendig.

In einem bevorzugten Ausführungsbeispiel ist die Leseeinrichtung in bzw. an einem ringförmigen Bauteil angeordnet, dessen Innendurchmesser in etwa dem Innendurchmesser der Öffnung des Gehäuses entspricht. Dieses ringförmige Bauteil kann dann vor der Öffnung des Gehäuses angeordnet werden, so dass die zu monierenden und zu demontierenden Schneidsatzelemente das Bauteil und damit die Leseeinrichtung passieren und erfasst werden. Ein solches Bauteil ist recht einfach auch nachträglich an bereits bestehenden Maschinen anzubringen, so dass diese kostengünstig umgerüstet werden können. Besonders einfach ist es, wenn man die Antenne bzw. Antennen am Innenumfang des ringförmigen Bauteils anordnet. Dann ist kein Material im Weg, welches die Datenübertragung zwischen dem Mittel und der Antenne stören könnte.

Weiterhin kann es sich bei dem Schneidsatzelement, welches am nächsten an der Öffnung angeordnet ist, um ein feststehendes Schneidsatzelement, wie eine Lochscheibe, ein Stützkreuz oder ein Distanzring, bevorzugt um ein Stützkreuz, besonders bevorzugt um ein Stützkreuz vor dem eine Lochscheibe angeordnet ist. Dies hat dann die bereits eingangs beschriebenen Sicherheitsaspekte zur Verhinderung schwerwiegender Verletzungen durch die rotierenden Messer zum Vorteil, so dass keine zusätzliche Abdeckung erforderlich ist. Das feststehende Schneidsatzelement durchgreift dann bevorzugt, zumindest bereichsweise im Bereich der Antenne bzw. Antennen, das ringförmige Bauteil und schützt so im Betrieb die Antenne vor dem Kontakt zu dem zu wolfenden Material, mechanischen Belastungen und Verunreinigungen.

Unter einer Ringantenne wird sowohl eine Antenne in Form eines geschlossenen Ringes als auch eines offenen Ringes verstanden. Die Ringantenne kann auch die Form eines offenen Ringes haben, bei dem sich die beiden offenen Enden leicht überlappen. Es kann aber auch keine Überlappung bei einem offenen Ring vorgesehen sein.

In einem weiteren bevorzugten Ausführungsbeispiel ist am Gehäuse eine Ausnehmung vorgesehen, während das ringförmige Bauteil einen Vorsprung aufweist, der mit der Ausnehmung in Wirkverbindung bringbar ist. Selbstverständlich ist es auch möglich mehrere Ausnehmungen und/oder mehrere Vorsprünge vorzusehen, wobei nicht für jede Ausnehmung ein Vorsprung vorhanden sein muss. Auch ist eine kinematische Umkehr denkbar, bei der der Vorsprung am Gehäuse und die Ausnehmung am ringförmigen Bauteil angeordnet ist. Besonders bevorzugt ist die Elektronik der Leseeinrichtung im Bereich des Vorsprungs angeordnet. Diese hat dann einen definierten Platz am Gehäuse, so dass bei einem Anschluss an eine Steuerung o.ä. der Maschine diese besser realisiert werden kann.

Ein solcher Anschluss an eine Anzeige und/oder Steuerung und/oder weitere Elektronik ist besonders bevorzugt, um die von der Leseeinrichtung ausgelesenen Daten weiter zu verarbeiten bzw. zur Steuerung der Maschine zu verwenden, so dass diese nur dann startet, wenn die für den Verarbeitungsvorgang korrekten Schneidsatzelemente in der richtigen Reihenfolge eingebaut sind. An einer Anzeige kann sich eine Bedienperson beispielsweise anzeigen lassen welche Schneidsatzelemente bereits eingebaut wurden und welche noch angebaut werden müssen. Die Anzeige und/oder Steuerung und/oder weiter Elektronik können sowohl am Fleischwolf selbst oder auch beabstandet davon, beispielsweise in einem eigenen Gehäuse oder in einer eigenen Einrichtung angeordnet sein. Die Kommunikation zwischen der Leseeinrichtung bzw. deren Elektronik und der Anzeige und/oder Steuerung und/oder weiteren Elektronik kann sowohl über Kabel als auch kabellos über übliche Übertragungswege wie WLAN, Bluetooth, Funk, Infrarot oder Mobilfunk erfolgen.

Die im Gehäuse befindliche Elektronik und/oder die eine oder mehreren Ringantennen können über eine oder mehrere Batterien oder Akkumulatoren mit elektrischer Energie versorgt werden. Alternative Möglichkeiten, wie Kabel, Solarzellen o.ä. sind selbstverständlich ebenfalls denkbar und vom Erfindungsgedanken mit umfasst.

Die feststehenden Schneidsatzelemente werden in einem bevorzugten Ausführungsbeispiel im Gehäuse der Vorrichtung mit einer Verdrehsicherung gesichert, die verhindert, dass das Schneidsatzelement im Gehäuse eine rotatorische Bewegung ausführen kann. Hierfür ist ein Nutenstein vorgesehen, der in eine Nut am Schneidsatzelement eingebracht und im Inneren des Gehäuses festgelegt wird. Die Elektronik kann hier in oder an dem Nutenstein vorgehsehen oder auch einstückig mit diesem ausgebildet sein.

In einem weiteren bevorzugten Ausführungsbeispiel wird der Schneidsatz im Gehäuse durch eine Überwurfmutter gesichert und verspannt. Auch diese Überwurfmutter kann ein Mittel zur berührungslosen und automatischen Identifikation aufweisen. Dann kann es vorgesehen sein, dass sich die Vorrichtung nur starten lässt, wenn auch die Überwurfmutter von der Leseeinrichtung erkannt wurde.

Wird die Überwurfmutter als Anbaugerät ausgebildet, beispielsweise bei der Herstellung von Würstchen, bei denen das gewolfte Material vom Fleischwolf aus direkt in eine Füllmaschine zum Befüllen einer Wursthülle verbracht wird oder bei der Befüllung von Verkaufsschalen mit Hackfleisch, kann eine Kontermutter an der Außenseite des Gehäuses angeordnet werden, um die Überwurfmutter zu kontern. Dann kann verhindert werden, dass Kräfte durch die Überwurfmutter auf den Schneidsatz im Gehäuse übertragen werden. Auch die Kontermutter kann ein Mittel zur berührungslosen und automatischen Identifikation aufweisen.

Zur Förderung des zu wolfenden Guts kann wenigstens eine Förderschnecke oder ein anderes Förderwerk vorgesehen sein und es ist auch möglich, dass die rotierenden Schneidsatzelemente auf einem Messerzapfen angeordnet sind und von diesem angetrieben werden. Auch die Förderschnecke bzw. das Förderwerk und/oder der Messerzapfen können über Mittel zur berührungslosen und automatischen Identifikation verfügen, damit klar ist welche konkreten Bauteile in der Vorrichtung verwendet werden.

Als Mittel zur berührungslosen und automatischen Identifikation können besonderes bevorzugt Transponder dienen, wie RFID-Transponder. In einem bevorzugten Ausführungsbeispiel dienen als Mittel zur berührungslosen und automatischen Identifikation aktive RFID-Transponder, da diese eine höhere Reichweite aufweisen. Es können aber auch passive RFID-Transponder Verwendung finden.

Weiterhin bevorzugt wird als Leseeinrichtung eine Lese-Schreib-Einrichtung verwendet. Hierdurch ist es möglich, Daten auf das Mittel zur berührungslosen und automatischen Identifikation zu schreiben, wie beispielsweise Standzeiten usw. Hierdurch lässt sich besser planen, wann ein Schneidsatzelement oder ein anderes Bauteil ausgetauscht oder überarbeitet werden muss. Die daten können beispielsweise beim Passieren des Lesegeräts auf das Mittel geschrieben werden. Schließlich ist auch eine Leseeinreichung oder eine Lese-Schreib-Einrichtung für Mittel zur berührungslosen und automatischen Identifikation mit wenigstens eine Ringantenne Gegenstand der vorliegenden Erfindung.

Weitere Vorteile und Ausführungsformern ergeben sich auf den Unteransprüchen, der nachfolgenden Beschreibung sowie den Zeichnungen. In den Figuren ist die Erfindung in einem Ausführungsbeispiel dargestellt. Es zeigen:
- Fig. 1:: ein erfindungsgemäßes Bauteil, perspektivisch,
- Fig. 2:: das Bauteil aus Fig. 1 in Seitenansicht,
- Fig. 3:: ein Gehäuse mit dem Bauteil aus Fig. 1 und 2 vor dem Zusammenbau, perspektivisch,
- Fig. 4:: die Elemente aus Fig. 3, zusammengebaut, perspektivisch,
- Fig. 5:: die Elemente aus Fig. 4 in Seitenansicht,
- Fig. 6:: die Elemente aus Fig. 4 und 5 in Vorderansicht,
- Fig. 7:: die Elemente aus Fig. 4 bis 6 mit Überwurfmutter geschnitten, perspektivisch,
- Fig. 8:: die Elemente aus Fig. 7 mit Stützkreuz, geschnitten, perspektivisch.

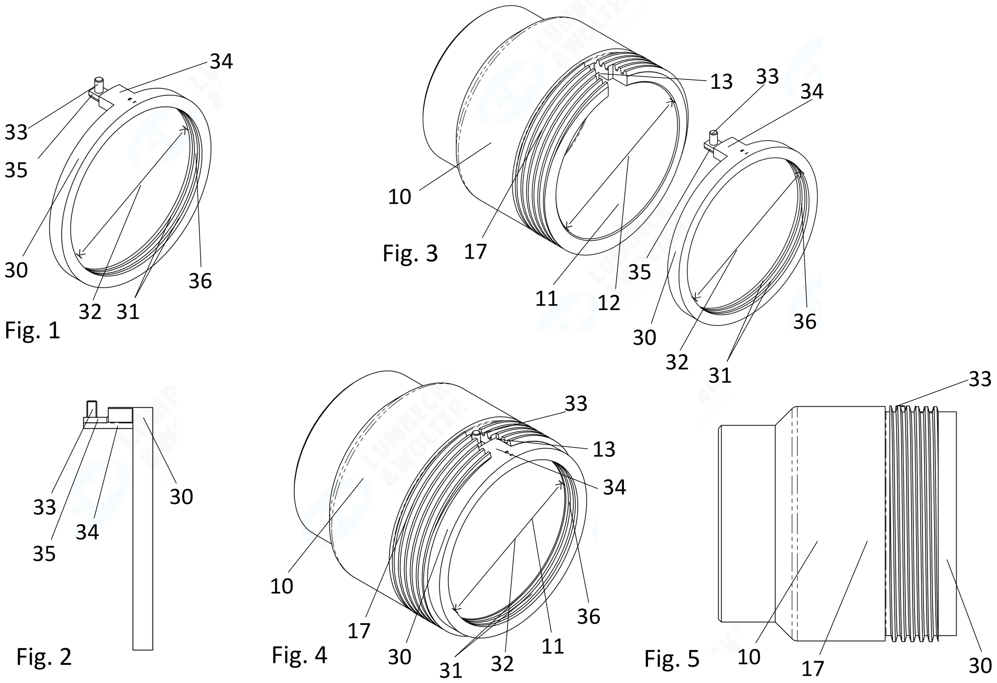

In den Fig. 1 und 2 ist ein erfindungsgemäßes Bauteil 30 gezeigt, welches ringförmig ausgestaltet ist. Das Bauteil 30 umfasst zwei Ringantennen 31, die am Innenumfang 36 des Bauteils 30 parallel zueinander angeordnet sind. Das Bauteil 30 weist weiterhin einen Vorsprung 34 auf, mit dem es in eine Ausnehmung 13 am Gehäuse 10 eines Fleischwolfs einbringbar ist. An dem Vorsprung 34 ist eine Elektronik 35 für die Leseeinrichtung angeordnet, an die auch die von den Ringantennen 31 empfangenen Daten, die mittels der Ringantennen 31 von einem oder mehreren Mitteln zur berührungslosen und automatischen Identifikation, die in einem Schneidsatzelement 20 vorgesehen sind, gesendet werden. Weiterhin ist ein Anschluss 33 vorgesehen, über den die von der Elektronik 35 empfangenen und ggf. verarbeiteten Daten an eine Anzeige, eine Steuerung oder eine weitere Elektronik übersandt werden können. Selbstverständlich können auch Daten von der Elektronik 35 empfangen bzw. generiert werden, um dann über eine oder beide Ringantennen 31 an Mittel wie z.B. Transponder, die in einem Schneidsatzelement 20 angeordnet sind, übertragen zu werden.

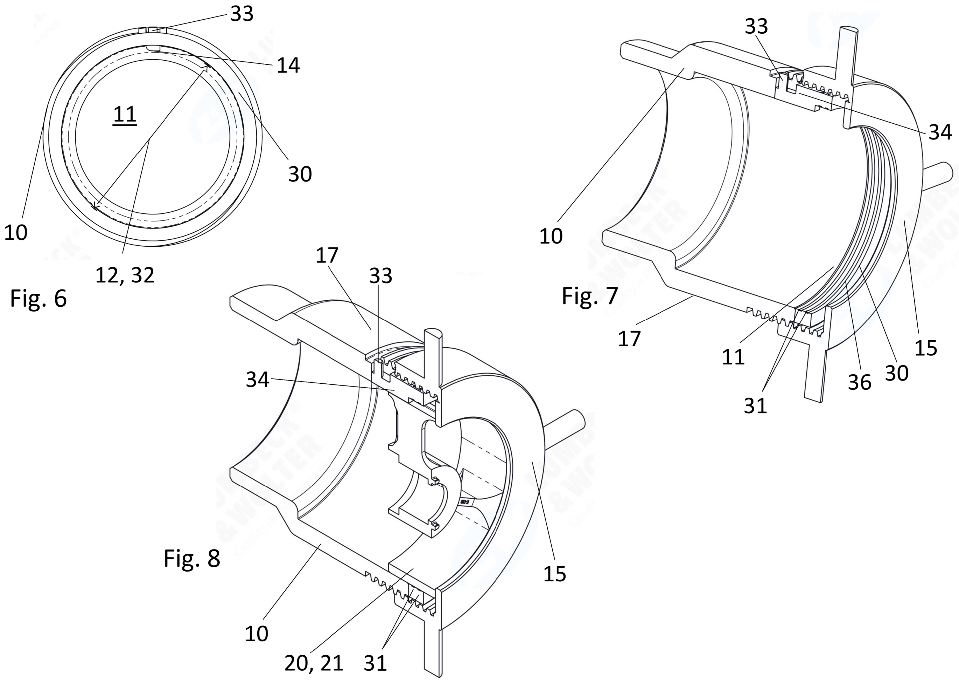

Die Fig. 3 bis 6 zeigen nun, wie das ringförmige Bauteil 30 an dem Gehäuse 10 der Vorrichtung angeordnet werden kann. Das Gehäuse 10 ist hier nur ausschnittweise gezeigt. Es zeigt den Bereich, in dem der Schneidsatz angeordnet ist sowie die Öffnung 11 aus der das gewolfte Gut den Fleischwolf bzw. die Vorrichtung verlässt. Man erkennt insbesondere aus den Fig. 3 und 6, dass der Innendurchmesser 32 des ringförmigen Bauteils 30 dem Innendurchmesser 12 des Gehäuses 10 im Bereich der Öffnung 11 entspricht. Das Gehäuse 10 weist eine Ausnehmung 13 auf, in die der Vorsprung 34 am ringförmigen Bauteil 30 einbringbar ist. Der Anschluss 33 kann dabei so bemessen sein, dass eine Benutzung des Außengewindes an der Außenseite 16 des Gehäuses 10 nicht gestört wird.

Aus Fig. 6 ist noch der Nutenstein 14 erkennbar, der die feststehenden Schneidsatzelemente 20 im Gehäuse 10 gegen ein Verdrehen sichert. Der Vorsprung 34 kann im Bereich des Nutensteins 14 angeordnet sei, wie hier gezeigt.

Fig. 7 zeigt jetzt die Anordnung aus den Fig. 4 bis 6 mit der Überwurfmutter 15. Diese steht mit dem an der Außenseite 16 des Gehäuses 10 angeordneten Außengewinde in Wirkverbindung. Die Überwurfmutter 15 dient dazu den Schneidsatz im Gehäuse 10 zu sichern und zu verspannen. Hier übergreift die Überwurfmutter 15 das ringförmige Bauteil 30 mit den Ringantennen 31 und ist am Außengewinde des Gehäuses 10 verschraubt. Der Anschluss 33 bleibt dabei frei von der Überwurfmutter 15 und kann genutzt werden, um dort z.B. eine Leitung anzuschließen.

Fig. 8 zeigt schließlich die erfindungsgemäße Anordnung, wobei das der Öffnung 11 am nächsten liegende Schneidsatzelement 20, hier ein Stützkreuz 21, montiert ist. Hierbei handelt es sich um ein feststehendes Schneidsatzelement 20. Das Stützkreuz 21 ist im Gehäuse 10 der Vorrichtung angeordnet und überdeckt auch den Innenumfang 36 des ringförmigen Bauteils 30. Hierdurch sind die beiden Ringantennen 31 vor dem zu wolfenden Produkt und vor anderer mechanischer Belastung geschützt. Das Stützkreuz 21 wirkt direkt mit der Überwurfmutter 15 zusammen, wodurch der im Gehäuse 10 befindliche Schneidsatz gesichert und verspannt wird. Da das ringförmige Bauteil 30 schmaler ausgestaltet ist, nimmt es keine Kräfte von der Überwurfmutter 15 auf, sondern diese wirkt nur auf das Stützkreuz und dadurch auf den Schneidsatz.

Abschließend sei noch darauf hingewiesen, dass die hier dargestellten Ausführungsbeispiele lediglich beispielhafte Verwirklichungen der Erfindung darstellen. Diese ist nicht darauf beschränkt. Es sind vielmehr noch Abänderungen und Abwandlungen möglich. So kann die Erfindung auch bei anderen Maschinen zur Zerkleinerung von Material, welche über mehrere Schneidelemente verfügen, eingesetzt werden, wie beispielsweise bei Fein- und Feinstzerkleinerern. Solche Anwendungen sind vom Erfindungsgedanken mit umfasst. Das gleiche gilt für Füllwölfe, Förderpumpen für z.B. Fleisch- und Schlachtabfälle usw. Statt einem einzelnen Mittel zur berührungslosen und automatischen Identifikation kann jedes Schneidsatzelement und jedes weiter Bauteil auch mehrere Mittel zur berührungslosen und automatischen Identifikation aufweisen. Der Nutenstein kann auch einer kinematischen Umkehr unterliegen. Hierbei weist der Nutenstein wenigstens eine Nut oder Ausnehmung auf, während das Schneidsatzelement eine Rippe bzw. einen Vorsprung besitzt, mit dem es in die Nut bzw. Ausnehmung am Nutenstein eingreift. Des Weiteren ist es auch möglich, dass die Ringantenne bzw. die Leseeinrichtung innerhalb der Öffnung des Gehäuses oder auch weiter innerhalb des Gehäuses angeordnet ist.

### Bezugszeichenliste:

- 10: Gehäuse
- 11: Öffnung
- 12: Innendurchmesser von 11
- 13: Ausnehmung
- 14: Nutenstein
- 15: Überwurfmutter
- 16: Außenseite von 10
- 20: Schneidsatzelement
- 21: Stützkreuz
- 30: Bauteil
- 31: Ringantenne
- 32: Innendurchmesser von 30
- 33: Anschluss
- 34: Vorsprung
- 35: Elektronik
- 36: Innenumfang von 30

## Patentansprüche

1. Vorrichtung,
mit einem Gehäuse (10) und mit einem im Gehäuse (10) anordbaren Schneidsatz, der wenigstens ein Schneidsatzelement (20) umfasst und/oder mit einem Lochzylinder,
wobei das Gehäuse (10) eine Öffnung (11) umfasst, durch die das bzw. die Schneidsatzelemente (20) des Schneidsatzes und/oder der Lochzylinder in das Gehäuse (10) einbringbar und aus diesem entfernbar sind,
wobei am und/oder im Schneidsatzelement (20) bzw. im oder am Lochzylinder wenigstens ein Mittel zur berührungslosen und automatischen Identifikation angeordnet ist,
und wobei am Gehäuse (10) eine Leseeinrichtung vorgesehen ist, die wenigstens eine Antenne und eine Elektronik (35) umfasst und die die auf dem Mittel zur berührungslosen und automatischen Identifikation gespeicherten Informationen auslesen kann,
**dadurch gekennzeichnet,**
**dass** die Leseeinrichtung wenigstens eine Ringantenne (31) umfasst, die umlaufend vor der Öffnung (11) des Gehäuses (10) angeordnet ist.

2. Vorrichtung nach Anspruch 1, **dadurch gekennzeichnet, dass** die Leseeinrichtung wenigstens zwei Ringantennen (31) umfasst, die parallel zueinander angeordnet sind.

3. Vorrichtung nach einem der Ansprüche 1 oder 2, **dadurch gekennzeichnet, dass** die Leseeinrichtung in einem ringförmigen Bauteil (30) angeordnet ist, dessen Innendurchmesser (32) in etwa dem Innendurchmesser (12) der Öffnung (11) des Gehäuses (10) entspricht.

4. Vorrichtung nach Anspruch 3, **dadurch gekennzeichnet, dass** die Ringantenne (31) oder Ringantennen (31) am Innenumfang (36) des Bauteils (30) angeordnet sind.

5. Vorrichtung nach einem der Ansprüche 3 oder 4, **dadurch gekennzeichnet, dass** das Schneidsatzelement (20), welches als nächstes an der Öffnung (11) vorgesehen ist, ein feststehendes Schneidsatzelement (20) wie eine Lochscheibe, ein Stützkreuz (21) oder ein Distanzring ist und dass dieses Schneidsatzelement (20) auch das ringförmige Bauteil (30) zumindest bereichsweise durchgreift.

6. Vorrichtung nach einem der Ansprüche 3 bis 5, **dadurch gekennzeichnet, dass** am Gehäuse (10) eine Ausnehmung (13) vorgesehen ist und dass das Bauteil (30) einen Vorsprung (34) aufweist, mit dem es in die Ausnehmung (13) am Gehäuse (10) einbringbar ist.

7. Vorrichtung nach Anspruch 6, **dadurch gekennzeichnet, dass** die Elektronik (35) der Leseeinrichtung im Bereich des Vorsprungs (34) angeordnet ist.

8. Vorrichtung nach einem der Ansprüche 1 bis 7, **dadurch gekennzeichnet, dass** die Elektronik (35) der Leseeinrichtung zumindest einen Anschluss (33) aufweist, über den sie die ausgelesenen Daten an eine Steuerung und/oder eine Anzeige und/oder eine elektronische Schaltung leitet.

9. Vorrichtung nach einem der Ansprüche 1 bis 8, **dadurch gekennzeichnet, dass** das Gehäuse (10) eine Verdrehsicherung für die feststehenden Schneidsatzelemente (20) des Schneidsatzes aufweist, welche wenigstens einen am Gehäuse (10) festlegbaren Nutenstein (14) und eine im Schneidsatzelement (20) angeordnete Nut umfasst.

10. Vorrichtung nach Anspruch 9, **dadurch gekennzeichnet, dass** die Elektronik (35) am oder im Nutenstein (14) angeordnet oder einstückig mit diesem ausgebildet ist.

11. Vorrichtung nach einem der Ansprüche 1 bis 10, **dadurch gekennzeichnet, dass** der Schneidsatz im Gehäuse (10) durch eine Überwurfmutter (15) gesichert und verspannt wird und dass die Überwurfmutter (15) ebenfalls ein Mittel zur berührungslosen und automatischen Identifikation aufweist.

12. Vorrichtung nach Anspruch 11, **dadurch gekennzeichnet, dass** die Überwurfmutter (15) als Anbaugerät ausgebildet ist und dass eine Kontermutter an der Außenseite (16) des Gehäuses (10) angeordnet ist, um die Überwurfmutter (15) zu kontern.

13. Vorrichtung nach einem der Ansprüche 1 bis 12, **dadurch gekennzeichnet, dass** für die Förderung des zu wolfenden Guts wenigstens eine Schnecke oder ein anderes Förderwerk vorgesehen ist und/oder dass eines oder mehrere der Schneidsatzelemente (20) auf einem Messerzapfen angeordnet sind und dass am oder im Messerzapfen und/oder an oder in der Schnecke bzw. dem Förderwerk ebenfalls Mittel zur berührungslosen und automatischen Identifikation angeordnet sind.

14. Vorrichtung nach einem der Ansprüche 1 bis 13, **dadurch gekennzeichnet, dass** als Mittel zur berührungslosen und automatischen Identifikation ein RFID-Transponder, insbesondere ein aktiver RFID-Transponder dient.

15. Vorrichtung nach einem der Ansprüche 1 bis 14, **dadurch gekennzeichnet, dass** die Leseeinrichtung als Lese-Schreib-Einrichtung ausgestaltet ist und dazu geeignet ist, Daten auf das Mittel zur berührungslosen und automatischen Identifikation zu schreiben, wobei das Mittel zur berührungslosen und automatischen Identifikation dazu geeignet ist, diese Daten zu empfangen und zu speichern.

16. Lese- und oder Schreib-Lese-Einrichtung für Mittel zur berührungslosen und automatischen Identifikation wenigstens eines Schneidsatzelements eines Schneidsatzes für eine Vorrichtung nach einem der Ansprüche 1 bis 15 mit wenigstens einer Ringantenne (31), die in oder an einem ringförmigen Bauteil (30) angeordnet ist.
